# EUROPÄISCHE PATENTSCHRIFT

(11) **EP 2 136 214 B1**
(45) Veröffentlichungstag und Bekanntmachung des Hinweises auf die Patenterteilung: **20.03.2013**
(21) Anmeldenummer: 09007137.4
(22) Anmeldetag: 28.05.2009
(51) Int. Cl.: G01P 13/00

(54) **Windsensor**
Wind sensor
Capteur de vent

(30) Priorität: 26.06.2008 DE 102008029942; 17.06.2008 DE 102008028402
(43) Veröffentlichungstag der Anmeldung: 23.12.2009
(73) Patentinhaber: Weinor GmbH & Co. KG, 50829 Köln (DE)
(72) Erfinder: Stawski, Karl Heinz, 50769 Köln (DE)
(74) Vertreter: Methling, Frank-Oliver

(56) Entgegenhaltungen:
- EP-A- 1 077 378
- WO-A-02/04960
- NL-A- 9 400 103

## Beschreibung

Die Erfindung betrifft eine Sensoranordnung zur Erfassung der Windstärke und Signalübermittlung, zumindest bei einer Grenzwertüberschreitung, aufweisend einen Bewegungssensor zur Erfassung einer Eigenbewegung in zumindest einer Dimension.

Derartige Sensoranordnungen zur Erfassung der Windstärke sind bekannt und werden beispielsweise in Form eines windantreibbaren Miniwindrades ausgeführt, wobei die Drehzahl des Windrades ein Maß für die Windstärke ist. Auch sind bekannt auf Hitzdrahttechnik beruhende Windsensoren, wobei der Hitzdraht durch die Luftbewegung abgekühlt wird und hierdurch der Widerstand des Drahtes sich verändert, was als Maß für die Windstärke herangezogen werden kann.

Derartige Windsensoren finden ihren Einsatz insbesondere bei der Steuerung von Markisen und Sonnenschutzanlagen, die bei Überschreitung eines Grenzwertes der Windstärke automatisch eingefahren werden, um einer Beschädigung vorzubeugen, da eine zu große Windlast zur Beschädigung oder Zerstörung der Markise oder Sonnenschutzanlage führen kann.

Nachteilig bei den bekannten Sensoranordnungen ist es, dass diese üblicherweise in der Nähe des Markisengehäuses angeordnet sein müssen, um mit der Markisensteuerung verbunden zu werden. Da Markisen jedoch üblicherweise an einem Gebäude angebracht werden, ist es oftmals problematisch, einen Windstärkesensor entsprechend zu montieren, da die vom Gebäude weg ausfahrende Markise einer Windlast ausgesetzt sein kann, die in der Nähe des Gebäudes aufgrund der Umgebung, wie beispielsweise durch Gebäudenischen, nicht messbar ist.

Die Anordnung eines solchen Sensors beispielsweise an einem ausfahrbaren Bauteil der Markise wie einem Gelenkarm oder dem Ausfahrprofil, hat jedoch den Nachteil, dass eine Erfassung der Windlast systembedingt nur im ausgefahrenen Zustand erfolgen kann, d.h. nur dann, wenn eine zu große Windlast eine Beschädigung bereits hervorrufen kann. Im eingefahrenen Zustand der Markise hingegen ist ein derartig angeordneter Sensor wiederum systembedingt nicht in der Lage, die Windlast zu erfassen, da er sich im eingefahrenen Zustand in dem Markisengehäuse befindet und somit der Windlast nicht ausgesetzt ist. Dies kann dazu führen, dass eine Markise trotz zu großer Windstärke ausgefahren und beschädigt wird, da die Windstärke mit einer solchen Sensoranordnung im eingefahrenen Zustand der Markise nicht erfasst werden kann.

Aus der EP 1 077 378 A1 ist ein Windmesser bekannt, bei dem die Schwingungen eines Referenzkörpers erfasst werden, der der Windströmung ausgesetzt ist. Die Schwinclungsanregung des Referenzkörpers durch den Wind erfolgt durch die Ausbildung einer karmannschen Wirbelstraße im Strömunasnachlauf, die eine pulsierende Kraft auf den Referenzkörper verursacht. Als Referenzkörper kommen schwingfähig gelagerte Kreiszylinder oder Kugeln eines bestimmten Durchmessers zum Einsatz. Hierdurch soll es ermöglicht werden, mit Hilfe des Referenzkörpers die Windgeschwindigikeit unabhängig von der jeweiligen Sonnenschutzanlae zu ermitteln. Nachteilig ist dabei, dass nur ein Absolutwert der Windgeschwindigkeit ermittelt werden kann, der jedoch nur bedingt einen Rückschluss auf die an der Sonnenschutzanlage angreifende Windlast zulässt, da das Verhalten der Sonnenschutzanlage nicht nur von der Windgeschwindigkeit, sondern auch von der tatsächlichen Einbausituation der Sonnenschutzanlage beeinflusst wird.

Aus der NL 94 00 103 ist ein Windsensor bekannt, bei dem ein profilierter Arm einer Windlast ausgesetzt und unter Windlast aus seiner Ruhelage ausgelenkt wird, wobei bei Überschreitung einer bestimmten Auslenkung ein elektrischer Kontakt geschlossen wird, sodass die Überschreitung eines Grenzwertes detektiert werden kann.

Eine Berücksichtung weiterer Parameter wie der tatsächlichen Einbausituation der Sonnenschutzanlage und die Auswirkungen bestimmter Windlasten auf die Anlage und eine ggf, sinnvolle Anlassung an die tatsächlichen Gegebenheiten ist mit derartigen Sensoranordnungen jedoch nicht möglich.

Die Aufgabe der Erfindung ist es, die vorgenannten Nachteile des Standes der Technik zu überwinden und eine zuverlässige Erfassung der Windstärke mittels der Sensoranordnung unabhängig von der Positionierung und dem Betriebszustand einer zu steuernden Einrichtung wie einer Markise zu gewährleisten.

Die Aufgabe der Erfindung wird erfindungsgemäß gelöst durch eine Sensoranordnung gemäß Anspruch 1. Vorteilhafte Weiterbildungen der Erfindung sind in den abhängigen Ansprüchen angegeben.

Besonders vorteilhaft bei der erfindungsgemäßen Sensoranordnung zur Erfassung der Windstärke und Signalübermittlung, zumindest bei einer Grenzwertüberschreitung der Windstärke, aufweisend einen Bewegungssensor zur Erfassung einer Eigenbewegung in zumindest einer Dimension, ist es, dass die Sensoranordnung an einem winderregbaren Freischwinger angeordnet ist.

Dadurch dass die gesamte Sensoranordnung an einem winderregbaren Freischwinger angeordnet ist und einen Bewegungssensor zur Erfassung einer Eigenbewegung in zumindest einer Dimension aufweist, ist eine zuverlässige Erfassung der Windstärke stets gewährleistet, da die Sensoranordnung in einfacher Weise derartig positioniert sein kann, dass der winderregbare Freischwinger, der die Sensoranordnung trägt, der zu erfassenden Windstärke ausgesetzt sein kann.

Die Sensoranordnung kann somit vollkommen unabhängig von einer Markise oder dergleichen angeordnet sein. Im Gegensatz zu der Anordnung eines Sensors an der Markise selbst, sei es im oder am Markisengehäuse, oder an ausfahrbaren Bauteilen der Markise, ist die erfindungsgemäße Sensoranordnung derart positionierbar, dass sie stets der zu erfassenden Windlast ausgesetzt ist.

Unter einem Freischwinger ist dabei insbesondere eine derartige Anordnung zu verstehen, bei der ein erster Bereich befestigbar respektive befestigt ist an einem Fuß, Fundament, Gebäude oder dergleichen, und wobei zumindest ein anderer Bereich frei schwingen-kann, d.h. ein freies Ende bildet, und somit durch auftreffenden Wind erregbar ist und im Wind frei schwingt. Der Freischwinger besteht daher vorzugsweise aus einem derartigen Material, welches Schwingbewegungen, d.h. Auslenkungen aus der Ruhelage reversibel ausführen kann.
Der Freischwinger kann eine schlanke Gestalt und insbesondere eine Erstreckung aufweisen, sodass das freie Ende entsprechende Schwingbewegungen auszuführen vermag. In seiner Längserstreckung ist somit der Freischwinger deutlich größer als in seiner Dicke, sodass winderregte Schwingbewegungen möglich sind, ähnlich einer Blume oder ähnlich einem Ast eines Baumes im Wind. Der Bewegungssensor ist vorzugsweise am freien Ende des Freischwingers angeordnet.

Die Sensoranordnung kann zur Signalübermittlung an ein Steuergerät, eine Markisenmotorsteuerung oder dergleichen über ein Kabel mit dem Steuergerät verbunden sein, wobei die Sensoranordnung wie erläutert frei positionierbar in Bezug auf das Steuergerät oder dergleichen ist.

Alternativ oder kumulativ weist die Sensoranordnung ein Funkmodul auf, mittels dessen ein Signal des Bewegungssensors an einen Empfänger übermittelt wird und / oder übermittelbar ist.

Durch die Anordnung eines Funkmoduls, mittels dessen das Sensorsignal über Funk übertragen wird, kann die gesamte Sensoranordnung vollkommen unabhängig von der zu steuernden Sonnenschutzanlage oder Markise positioniert werden, beispielsweise auch außerhalb einer Gebäudenische in der eine Markise oder dergleichen montiert ist. Durch diese von der zu steuernden Markise unabhängige Positionierbarkeit der gesamten Sensoranordnung, kann eine zuverlässige Erfassung der Windstärke stets gewährleistet werden.

Durch die Verwendung eines Funkmoduls zur Übertragung des Sensorsignals an ein Empfangsmodul der Markisensteuerung ist eine vollkommen unabhängige Positionierung möglich, ohne dass ein optisch ggf. störendes Kabel verlegt werden muss.

Es ist daher eine Positionierung der Sensoranordnung vollkommen unabhängig von der zu steuernden Markise, Sonnenschutzanlage, Beschattung oder dergleichen möglich.

Vorzugsweise ist ein Grenzwert der Bewegungsintensität vorgebbar und festlegbar, ab dem eine Signalübertragung erfolgt. Hierdurch kann im Sinne einer Alarmmeldung die Sensoranordnung derart ausgestaltet werden, dass erst bei Überschreitung eines Grenzwertes der Bewegungsintensität der Sensoranordnung, die ein Maß für die Windstärke ist, eine Signalübertragung erfolgt und somit die Steuerung der Markise ein automatisches Einfahren der Markise auslösen kann.

Vorzugsweise ist der Bewegungssensor als Schüttelsensor dergestalt ausgestaltet, dass der Bewegungssensor sensitiv auf Bewegungen in zwei Dimensionen ist, besonders bevorzugt ist der Bewegungssensor sensitiv auf Bewegungen in drei Dimensionen. Der Bewegungssensor setzt die Bewegungen in ein Signal um oder der Bewegungssensor setzt die Bewegungen bei Überschreitung eines Grenzwertes in ein Signal um. Der Bewegungssensor kann derart ausgestaltet sein, dass er seine Eigenbewegung hinsichtlich seiner eigenen Geschwindigkeit und / oder seiner Beschleunigung oder Verzögerung erfasst und auswertet und in ein Signal umsetzt oder hinsichtlich einer Grenzwertüberschreitung erfasst und bei Überschreitung eines Grenzwertes ein Signal absetzt.

Besonders bevorzugt weist die Sensoranordnung ein Solarmodul auf, mittels dessen aus einfallendem Licht, elektrische Energie erzeugt und die Sensoranordnung gespeist wird.

Hierdurch kann eine vollkommen autark arbeitende Sensoranordnung geschaffen werden, da durch die Anordnung eines Solarmoduls eine ausreichende Stromversorgung erfolgen kann, d.h. durch die Anordnung eines Solarpanels, welches derart dimensioniert ist, dass die mittels des Solarpanels erzeugte elektrische Energie ausreichend ist, um die Sensoranordnung mit elektrischer Energie zu versorgen. Mittels des Solarmoduls kann sowohl Sonnenlicht als auch künstliches Licht in elektrische Energie umgesetzt werden, um die Sensoranordnung zu speisen. Hierdurch wird die gesamte Anordnung unabhängig von Versorgungsleitungen und kann beliebig positioniert werden. Insbesondere in Verbindung mit dem Funkmodul ist eine vollkommen unabhängige Positionierung der Sensoranordnung möglich.

Besonders bevorzugt weist die Sensoranordnung einen Akkumulator auf, mittels dessen die Sensoranordnung mit elektrischer Energie gespeist wird. Insbesondere kann ein derartiger Akkumulator mittels eines Solarmoduls gespeist und geladen werden. Hierdurch ist es möglich, beispielsweise tagsüber bei einfallendem Sonnenlicht den Akkumulator der Sensoranordnung zusätzlich zur Stromversorgung der Sensoranordnung aufzuladen, um auch in den Nachtstunden ohne Sonneneinstrahlung eine Versorgung der Sensoranordnung mit elektrischer Energie durch den Akkumulator zu gewährleisten.

Zusätzlich zu dem Bewegungssensor zur Erfassung einer Eigenbewegung können weitere Sensoren angeordnet sein, insbesondere ein Lichtsensor und / oder ein Bewegungsmelder und / oder ein Niederschlagssensor und / oder ein Temperatursensor. Hierdurch kann eine Sensoranordnung geschaffen werden, mittels derer unabhängig von einer oder mehreren zu steuernden Sonnenschutzanlegen und / oder Markisen eine Mehrzahl von Umgebungsparametem überwacht werden kann. In Abhängigkeit dieser Umgebungsparameter kann dann die Ansteuerung der Sonnenschutzanlegen und / oder Markisen erfolgen, sodass beispielsweise bei starkem einfallendem Licht ein Ausfahren einer Beschattung erfolgt und bei zu starker Windlast ein automatisches Einfahren der Beschattung erfolgt, um eine Beschädigung der Anlage zu vermeiden.

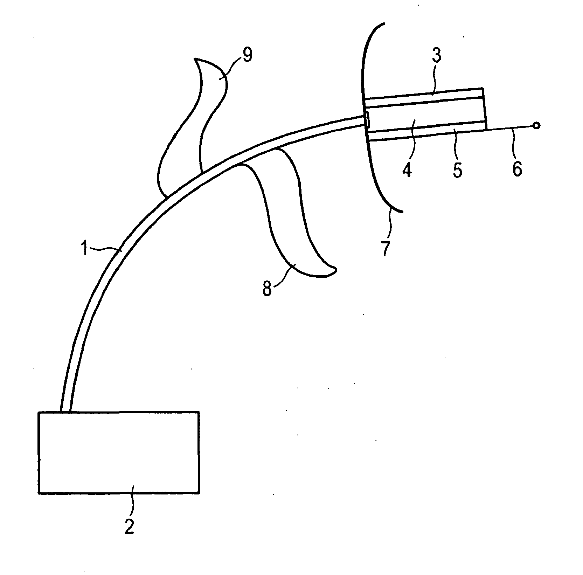

In der Figur ist ein Ausführungsbeispiel einer erfindungsgemäßen Sensoranordnung dargestellt und wird nachfolgend näher erläutert.

Die Sensoranordnung gemäß der Figur ist am vorderen Ende eines Freischwingers 1 angeordnet. Der Freischwinger 1 selbst ist befestigt an einem Fuß 2, der geeignet ist, beispielsweise an einem Gebäude befestigt zu werden.

Die Sensoranordnung weist ein Solarpanel 3 auf. Das Solarpanel 3 dient der Stromversorgung der gesamten Sensoranordnung und insbesondere des dreidimensional sensitiven Schüttelsensors 4. Das Signal des Schüttelsensors 4 wird mittels des Funkmoduls 5 über die Antenne 6 zu dem Steuergerät der Markise übertragen.

Der Freischwinger 1 ist optisch ausgestaltet als Blume, in dem die Sensoranordnung am vorderen Ende des Freischwingers 1 im Zentrum des blütenförmig gestalteten Kopfes 7 des Freischwingers 1 angeordnet ist und der Freischwinger 1 des weiteren blattförmige Verzierungen 8 und 9 aufweist.

Das Sensormodul 4 weist einen integrierten Akkumulator zur Speicherung elektrischer Energie auf. Der Akkumulator des Sensormoduls 4 wird ebenfalls gespeist über das Solarpanel 3 und ist somit stets geladen, um auch in den Nachtstunden ohne einfallendes Sonnelicht die Stromversorgung der Sensoranordnung zu gewährleisten.

## Patentansprüche

1. Sensoranordnung zur Erfassung der Windstärke und Signalübermittlung zumindest bei einer Grenzwertüberschreitung, aufweisend einen Bewegungssensor (4) zur Erfassung einer Eigenbewegung in zumindest einer Dimension, **dadurch gekennzeichnet, dass** die Sensoranordnung an einem winderregbaren Freischwinger (1) angeordnet ist, wobei der Freischwinger (1) einen ersten befestigten Bereich aufweist, und wobei zumindest ein anderer Bereich ein freies Ende bildet und somit durch auftreffenden Wind erregbar ist und im Wind frei schwingt, wobei der Bewegungssensor (4) am freien Ende des Freischwingers (1) angeordnet ist.

2. Sensoranordnung nach Anspruch 1, **dadurch gekennzeichnet, dass** sie ein Funkmodul (5) aufweist, mittels dessen ein Signal des Bewegungssensors (4) an einen Empfänger übermittelt wird und/oder übermittelbar ist.

3. Sensoranordnung nach Anspruch 1 oder 2, **dadurch gekennzeichnet, dass** ein Grenzwert der Bewegungsintensität, ab dem eine Signalübertragung erfolgt, vorgebbar und festlegbar ist.

4. Sensoranordnung nach einem der vorherigen Ansprüche, **dadurch gekennzeichnet, dass** der Bewegungssensor (4) sensitiv auf Bewegungen in zwei Dimensionen ist, insbesondere in drei Dimensionen, und die Bewegungen in ein Signal umsetzt oder bei Überschreitung eines Grenzwertes in ein Signal umsetzt.

5. Sensoranordnung nach einem der vorherigen Ansprüche, **dadurch gekennzeichnet, dass** sie ein Solarmodul (3) aufweist, mittels dessen aus einfallendem Licht elektrische Energie erzeugt und die Sensoranordnung gespeist wird.

6. Sensoranordnung nach einem der vorherigen Ansprüche, **dadurch gekennzeichnet, dass** sie einen Akkumulator aufweist, mittels dessen die Sensoranordnung mit elektrischer Energie gespeist wird, insbesondere dass der Akkumulator mittels eines Solarmoduls (3) geladen wird.

7. Sensoranordnung nach einem der vorherigen Ansprüche, **dadurch gekennzeichnet, dass** sie einen Lichtsensor und/oder einen Bewegungsmelder und/oder Niederschlagssensor und/oder Temperatursensor aufweist.

## Claims

1. Sensor arrangement for detection of the wind strength and signal transmission at least when a limit value is exceeded, comprising a movement sensor (4) for detection of an independent movement in at least one dimension, **characterised in that** the sensor arrangement is arranged on an inductor loudspeaker (1) which can be excited by wind, wherein the inductor loudspeaker (1) comprises a first fixed region, and wherein at least one other region forms a free end, and can thus be excited by incident wind and oscillates freely in the wind, wherein the movement sensor (4) is arranged at the free end of the inductor loudspeaker (1).

2. Sensor arrangement according to claim 1, **characterised in that** it comprises a radio module (5), by means of which a signal of the movement sensor (4) is transmitted and/or can be transmitted to a receiver.

3. Sensor arrangement according to either claim 1 or claim 2, **characterised in that** a limit value of the movement intensity, from which a signal transmission takes place, can be preset and defined.

4. Sensor arrangement according to any of the preceding claims, **characterised in that** the movement sensor (4) is sensitive to movements in two dimensions, in particular in three dimensions, and converts the movements into a signal or converts the movements into a signal when a limit value is exceeded.

5. Sensor arrangement according to any of the preceding claims, **characterised in that** it comprises a solar module (3), by means of which electric energy is produced from incident light and the sensor arrangement is powered.

6. Sensor arrangement according to any of the preceding claims, **characterised in that** it comprises an accumulator, by means of which the sensor arrangement is supplied with electric energy, in particular **in that** the accumulator is charged by means of a solar module (3).

7. Sensor arrangement according to any of the preceding claims, **characterised in that** it comprises a light sensor and/or a movement detector and/or a precipitation sensor and/or temperature sensor.

## Revendications

1. Aménagement de capteur pour déterminer la force du vent et transmettre un signal au moins dans le cas d'un dépassement de valeur limite, présentant un capteur de mouvement (4) pour déterminer un mouvement propre dans au moins une dimension, **caractérisé en ce que** l'aménagement de capteur est monté sur un dispositif d'oscillation libre (1) excitable par le vent, dans lequel le dispositif d'oscillation libre (1) présente une première zone fixée et dans lequel au moins une autre zone forme une extrémité libre et, par suite, peut être excitée par l'impact du vent et osciller librement dans le vent, dans lequel le capteur de mouvement (4) est agencé à l'extrémité libre du dispositif d'oscillation libre (1).

2. Aménagement de capteur selon la revendication 1, **caractérisé en ce qu'**il présente un module radio (5), au moyen duquel un signal du capteur de mouvement (4) est transmis et/ou peut être transmis à un récepteur.

3. Aménagement de capteur selon la revendication 1 ou la revendication 2, **caractérisé en ce qu'**une valeur limite de l'intensité du mouvement, à partir de laquelle il se produit une transmission de signal, peut être prédéterminée et fixée.

4. Aménagement de capteur selon l'une quelconque des revendications précédentes, **caractérisé en ce que** le capteur de mouvement (4) est sensible aux mouvements dans deux dimensions, en particulier dans trois dimensions, et convertit les mouvements en un signal ou les convertit en un signal lors du dépassement d'une valeur limite.

5. Aménagement de capteur selon l'une quelconque des revendications précédentes, **caractérisé en ce qu'**il présente un module solaire (3), au moyen duquel il se produit, à partir de la lumière incidente, de l'énergie électrique qui alimente l'aménagement de capteur.

6. Aménagement de capteur selon l'une quelconque des revendications précédentes, **caractérisé en ce qu'**il présente un accumulateur, au moyen duquel l'aménagement de capteur est alimenté en énergie électrique, en particulier **en ce que** l'accumulateur est chargé au moyen d'un module solaire (3).

7. Aménagement de capteur selon l'une quelconque des revendications précédentes, **caractérisé en ce qu'**il présente un capteur de lumière et/ou un signalisateur de mouvement et/ou un capteur de précipitations et/ou un capteur de température.
